# EUROPEAN PATENT APPLICATION

(11) **EP 1 533 003 A1**
(43) Date of publication of application: **25.05.2005**
(21) Application number: 04103996.7
(22) Date of filing: 20.08.2004
(51) Int. Cl.: A62D 3/00

(54) **Composition for degrading aflatoxins and other toxic substances**

(30) Priority: 21.11.2003 JP 2003391742
(71) Applicant: National Food Research Institute, Tsukuba-shi, Ibaraki (JP)
(72) Inventor: Yabe, Kimiko, Tsukuba-shi, Ibaraki (JP); Nakagawa, Hiroyuki, Tsukuba-shi, Ibaraki (JP)
(74) Representative: Gille Hrabal Struck Neidlein Prop Roos

(57) **Abstract**

A technique has been developed for degrading toxic substances such as aflatoxins-related substances, without affecting on the properties of agricultural commodities, foods and feeds. The technique includes a composition for degrading toxic substances selected from aflatoxins-related substances and toxic aromatic compounds, the composition which contains a hemin and/or heme-containing substance, and a method for detoxifying agricultural commodities, foods or feeds contaminated with toxic substances selected from aflatoxins-related substances and toxic aromatic compounds, the method which comprises contacting the contaminated agricultural commodities, foods or feeds with a hemin and/or heme-containing substance.

## Description

### FIELD OF THE INVENTION

The present invention relates to a composition for degrading aflatoxins and other toxic substances. Precisely, the invention relates to a composition for degrading aflatoxins and other toxic substances, which includes, as the active ingredient thereof, hemin and/or heme protein.

### DESCRIPTION OF THE BACKGROUND

Aflatoxins are produced by some fungi that belong to the genus *Aspergillus sp.,* and they are the most carcinogenic substances in the nature. There are various derivatives of aflatoxins, and among them, aflatoxin B₁ (AFB₁) is the most toxic one. AFB₁ is sometimes detected at large amount in various agricultural commodities including cereals as well as other foods and feeds.

Since agricultural commodities are traded widely in the world, their contamination by aflatoxins is a serious problem all over the world. From this background, contamination of agricultural commodities by aflatoxins is monitored in many advanced nations, and most of them determine the contamination limit they can accept. In that manner, contamination of agricultural commodities by aflatoxins is always monitored, and those contaminated by aflatoxins above the limit concentration are discarded or incinerated.

Aflatoxins are resistant to heat, and they are degraded at temperature higher than 250°C. This temperature is higher than that for ordinary cooking (about 180°C). If agricultural commodities contaminated by aflatoxins are treated at such high temperatures, their quality sometimes changes. Furthermore, it costs a lot. From these reasons, such process would not be practical.

As an alternative method of degrading aflatoxins, treatment with ammonia or alkali has been proposed (Park DL. 1993, Perspectives on Mycotoxin Decontamination Procedures, *Food. Addit. Contam.,* 10, 49-60; Park DL, Lee LS, Price RL, Pohland AE, 1988, Review of the Decontamination of Aflatoxins by Ammoniation: Current Status and Regulation, *J. Assoc. , Off. Anal. Chem.,* 71, 685-703; and USP 3,429,709). However, since the properties of the agricultural commodities are often affected through these methods, they are not applicable to foods. Therefore, these methods are useful only for feeds, although the problem of deterioration of the quality of feeds still remains.

Bisphenol A (BPA) is used as a monomer for the synthesis of many polymers, such as polycarbonates, epoxy resins, phenol resins, polyesters and polyacrylates. BPA is also used as bactericide. However, it has been recently suspected of being an endocrine-disrupting chemical, which may cause water pollution, soil pollution, and other environmental pollutions. Biological degradation of BPA has been examined using Gram-negative aerobic bacterium, and a degradation pathway of this compound has been also proposed (Spivack, J., Leib, T.K., and Lobos, J.H., *J. Biol. Chem.,* 269, 7323-7329 (1994)). However, more inexpensive and efficient methods to degrade such toxic substances still remain to be developed.

### SUMMARY OF THE INVENTION

The object of the invention is to develop methods to degrade toxic substances such as aflatoxins-related substances without affecting the properties of agricultural commodities, foods and feeds.

We, the present inventors, have assiduously studied the methods of degrading toxic substances such as aflatoxins-related substances and toxic aromatic compounds. We have especially studied the methods of degrading aflatoxins-related substances without changing the properties of agricultural commodities, foods and feeds and the methods of effectively degrading toxic aromatic compounds. We have been specifically involved in the method of degrading toxic substances with enzymes.

During our studies, we have found some aflatoxins-degrading activities both in enzymes from mushrooms or microorganisms and in commercially-available enzymes. We have then confirmed that even after these enzymes were heated at high temperature at which they should be denatured, they still kept their aflatoxins-degrading activity.

Based on these results, we assumed that heme, as a prosthetic group of the enzymes, would have aflatoxins-degrading activity in itself. We then investigated the function of hemin. We finally discovered that the structure of heme itself has aflatoxins-degrading activity. We also found that other heme-containing substances have the similar aflatoxins-degrading activities. We further confirmed that these substances have the activities to degrade toxic aromatic compounds. On the basis of these findings, we have completed the present invention.

Specifically, the first aspect of the present invention relates to a composition for degrading toxic substances selected from aflatoxins-related substances and toxic aromatic compounds, the composition which contains a hemin and/or heme-containing substance.

According to the second aspect of the invention, the heme-containing substance of the composition according to the first aspect of the invention is heme protein.

The third aspect of the present invention relates to a method for detoxifying agricultural commodities, foods or feeds contaminated with toxic substances selected from aflatoxins-related substances and toxic aromatic compounds, the method which comprises contacting the contaminated agricultural commodities, foods or feeds with a hemin and/or heme-containing substance.

According to the fourth aspect of the invention, the heme-containing substance in the method according to the third aspect of the invention is heme protein.

According to the fifth aspect of the invention, the method according to the third or fourth aspect of the invention comprises hydrogen peroxide coexisting along with the hemin and/or heme-containing substance.

As so mentioned hereinabove, the invention provides a composition for degrading toxic substances selected from aflatoxins-related substances and toxic aromatic compounds, the composition which contains a hemin and/or heme-containing substance as an active ingredient, and also provides a method for detoxifying agricultural commodities, foods or feeds contaminated with aflatoxins-related substances, the method which comprises contacting the contaminated products with a hemin and/or heme-containing substance optionally along with hydrogen peroxide.

According to the invention, therefore, the amount of agricultural commodities that are contaminated with aflatoxins and thus discarded may be reduced, whereby being efficiently utilized.

Ammonia treatment and alkali treatment for degrading toxic substances may denature agricultural commodities such as cereals as well as other foods and feeds, and once those products are treated with ammonia or alkali, they are no longer usable as foods. The invention also solves this problem.

### BRIEF DESCRIPTION OF THE DRAWINGS

Fig. 1 is the HPLC chromatogram of the reaction mixture in Example 1.
Fig. 2 shows the result of TLC analysis of the reaction mixture in Example 1.
Fig. 3 is the mass spectrum of the product in AFB₁ degradation with hemin.
Fig. 4 is the graph showing a time course of AFQ₁ degradation.
Fig. 5 is the graph showing the effect of hemin amount added in the degradation of AFB₁.
Fig. 6 is the graph showing the effect of hydrogen peroxide amount added in the degradation of AFB₁ with hemin.
Fig. 7 is the graph showing the degradation of AFB₁ with cytochrome C.
Fig. 8 is the graph showing the degradation of AFB₁ with hemoglobin.
Fig. 9 is the graph showing the degradation of AFB₁ with hemin immobilized on EAH Sepharose 4B gel.
Fig. 10 is the graph showing the degradation of bisphenol A with hemin.
Fig. 11 is the graph showing the degradation of aniline with hemin.

### DETAILED DESCRIPTION OF THE INVENTION

As described above, the invention according to the first aspect of the invention provides a composition for degrading toxic substances selected from aflatoxins-related substances and toxic aromatic compounds, the composition which contains a hemin and/or heme-containing substance.

Hemin is a one-Cl⁻-coordinated Fe(III) complex formed through oxidation of an iron complex of porphyrin, heme, and it is sometimes referred to as chlorohemin. When the heme part thereof is protoheme, the compound is referred to as protohemin, and its molecular weight is 652.

Apart from hemin, heme-containing substances also have the activity to degrade aflatoxins-related substances and other toxic substances, and they are also usable herein.

Heme-containing substances include those shown in Table 1 below. For example, they are hemoglobin, myoglobin, catalase, cytochromes, peroxidase, tryptophane pyrrolase.

**Table 1**

| Heme | Hemoprotein |
|---|---|
| Protoheme | Hemoglobin |
| | Myoglobin |
| | Catalase |
| | Cytochrome B |
| | Cytochrome o |
| | Peroxidase |
| | Cytochrome c peroxidase |
| | Tryptophane pyrrolase |
| | Hemoprotein P-450 |
| Heme c | Cytochrome C |
| | Cytochrome cc' |
| Chlorocruoroheme | Chlorocruorin |
| Heme a | Cytochrome A |
| Heme d | *Pseudomonas aeruginosa* |
| | Nitrite Reductase |
| | (pyocyanic cytochrome |
| | oxidase) |
| | Cytochrome D |

The amount of the hemin and heme-containing substance contained in the composition of the first and second aspects of the invention is, for example, when 16 µM of AFB₁ is to be degraded with it, suitably from 20 to 200 µM, but preferably from 50 to 100 µM in terms of the heme concentration of the substance.

If necessary, auxiliary agents such as stabilizer and vehicle may be added to the composition. Adding hydrogen peroxide to the composition is effective according to the fifth aspect of the invention, and the composition containing it enhances degradation activity.

Aflatoxins-related substances are, for example, aflatoxin B₁ and its derivatives, as well as aflatoxin precursors. Concretely, they are aflatoxin B₂, aflatoxin G₁ and aflatoxin G₂ that are major aflatoxin derivatives produced by fungi, as well as aflatoxin M₁ and aflatoxin M₂ often detected in milk. Aflatoxin precursors are, for example, sterigmatocystin and dihydrosterigmatocystin.

Toxic aromatic compounds are, for example, phenolic compounds such as BPA and alkylphenols, and examples of alkylphenols are nonylphenol and 4-octylphenol. These substances are suspected of being endocrine-disrupting chemicals (environmental hormones). Non-phenolic compounds such as dibenzothiophene and aniline are also toxic aromatic compounds. The former is contained in crude petroleum oil and coal, and known to cause catalyst deterioration and equipment corrosion in petroleum refining process. In addition, it causes air pollution and acid rain by combustion thereof. The latter is a corrosive environmental contaminant that is often detected in water and sediment.

Agricultural commodities, foods and feeds that are sometimes contaminated with aflatoxins-related substances are, for example, seeds such as peanuts, pistachio nuts, sesames, and oils derived from them; cereals such as rice, adlai, corn, buckwheat; spices such as nutmeg, capsicum, paprika, white pepper; as well as natural cheese, milk, muscovado sugar. Further mentioned are feed such as dry corn; as well as foods such as milk from domestic animals fed with aflatoxin-contaminated feed, and milk products, meat and pluck products derived from such domestic animals. Among them, high concentration of aflatoxins were detected in pistachio nuts, which had been imported from Iran in 1998, and the Ministry of Labor, Welfare and Health of Japan is now making a strict inspection at quarantine stations. In Southeast Asia, a number of aflatoxin-producing fungi often grow under high-temperature and high-humidity weather conditions especially at those places where agricultural commodities are stored, and contamination with aflatoxins causes enormous damages against human health and economy.

BPA, a toxic aromatic compound, may be detected in products which are made of polycarbonate, such as nursing bottles, antimicrobial agent-containing cups and plates for babies and children. In addition, since BPA is used as an anticorrosive agent for epoxy resin to coat cans (for drinks and foods) , it is sometimes detected even in canned foods, which had been sterilized under high-temperature and high-pressure.

Alkylphenols are used as antioxidants for polyvinyl chloride resins and polystyrene resins. Therefore, alkylphenols such as nonylphenol are detected in disposable cups, which were made of polystyrene resin, or in wrapping films, which were made of soft polyvinyl chloride resin. Therefore, there is a high possibility that BPA and alkylphenols would be taken into human bodies through foods and drinks in daily life.

The embodiment of making agricultural commodities, foods and feeds coexist with a hemin and/or heme-containing substance in the detoxication method according to the third to fifth aspects of the invention is not specifically defined. In general, for example, a hemin and/or heme-containing substance is suspended in water or phosphate buffer (pH 7.5) and the suspension is directly added to agricultural commodities, foods or feeds. An effect will be observed if they are kept at a temperature not lower than room temperature. In particular, significant degradation is achieved within 6 hours at 50°C or higher than 50°C. The degradation may be confirmed as follows: aflatoxins and other toxic substances contained in the agricultural commodities, foods and feeds are extracted with chloroform or ethyl acetate, and the resulting extract is then analyzed by TLC or HPLC. As a simpler method for nondestructive examination, fluorescences of aflatoxins in the agricultural commodities can be detected under UV light. According to still another embodiment of the invention, a hemin and/or heme-containing substance is added to uncontaminated agricultural commodities, foods or feeds so that they can be prevented from being contaminated with toxic substances.

Usage of hydrogen peroxide together with a hemin and/or heme-containing substance is more effective than using a hemin and/or heme-containing substance alone, since it further enhances the degradation efficiency of aflatoxins and other toxic substances as described in the fifth aspect of the invention. In this case, the amount of hydrogen peroxide to be added is, for example, when 16 µM of AFB₁ is to be degraded with it, suitably from 0.1 to 5.0 mM, but preferably from 0.5 to 1.0 mM.

As will be described hereinunder, hemin may be immobilized on a carrier such as Sepharose gel. It is known that hemin exhibits peroxidase activity in organic solvents when it is immobilized on polyethylene glycol (PEG) (Takahashi, K., Matsushima, A., Saito, Y., and Inada, Y., *Biochem. Biophys*. *Res. Com.,* 138, 283-288 (1986)).

Accordingly, such an immobilized hemin can be used for the treatment of foods and feeds to degrade toxic substances and contaminants, and then easily removed after the treatment. It is also suggested that contaminated foods and feeds can be treated continuously by supplying them into a column charged with such immobilized hemin.

Considering the practical decontamination of foods and feeds, we tried to degrade aflatoxin M₁, which is an aflatoxin derivative that may be detected in milk. A sample of contaminated milk was prepared as follows; commercially available milk was mixed with a phosphate buffer to be adjusted pH 7.5, and then a standard aflatoxin M₁ was added to the milk so that its concentration is adjusted to 1 µM. When hemin suspension was added to it, 36 % of aflatoxin M₁, which had been added, disappeared through reaction at 30°C for 6 hours.

On the other hand, the following experiments were carried out so as to presume the degradation mechanism of aflatoxins with hemin. In general, when peroxidase is reacted with hydrogen peroxide, an intermediate called Compound I is formed, which causes decrease in the absorbance at a specific wavelength region (around 400 nm). This is referred to as Soret absorption. In addition, when the intermediate is then reacted with a substrate such as *p*-aminobenzoic acid, the Soret absorption is restored and the enzyme activity is correspondingly regenerated.

Based on the above knowledge, hemin was reacted with hydrogen peroxide. As a result, the Soret absorption was observed, which suggests the formation of an intermediate corresponding to Compound I. When, *p*-aminobenzoic acid was added further to it, the Soret absorption was restored. These results confirm that hemin has peroxidase activity.

Therefore, hemin was reacted with hydrogen peroxide and then AFB₁ was added to it. Similarly, the Soret absorption was observed and then restored. Accordingly, this result indicates that the AFB₁ degradation with hemin is caused by the peroxidase activity of hemin.

As described in detail hereinabove with reference to the preferred embodiments thereof, the invention provides a composition for degrading toxic substances selected from aflatoxins-related substances and toxic aromatic compounds, the composition which contains, as the active ingredient thereof, a hemin and/or heme-containing substance.

The invention also provides a method for detoxifying agricultural commodities, foods or feeds contaminated with aflatoxins-related substances and other toxic substances, the method which comprises treating the products, foods and feeds with a hemin and/or heme-containing substance optionally along with hydrogen peroxide.

According to the invention, therefore, the amount of agricultural commodities that are discarded owing to contamination with aflatoxins and other toxic substances may be reduced and they can be effectively utilized.

The invention is described in more detail with reference to the following examples, to which, however, the invention should not be limited.

### Example 1:

### Degradation of AFB₁ with hemin:

Twenty five microliter of 200 mM phosphate buffer (pH 7.5), 10 µL of aqueous solution of 10 % detergent (Tween 80), 38 µL of distilled water, 1 µL of 50 mM hydrogen peroxide aqueous solution, and 1 µL of DMSO solution of 1.6 mM AFB₁ where put into a 0.5-mL microtube to prepare a reaction mixture. Here, 25 µL of 400 µM hemin suspension was added to it and incubated at 30°C for 30 minutes. The final concentration of each component was: AFB₁, 16 µM; hydrogen peroxide, 500 µM; Tween 80, 1 %; hemin, 100 µM.

After the reaction, HPLC and TLC analyses were performed to confirm the degradation of AFB₁ and the formation of reaction product. The equal amount of ethyl acetate was added to the reaction mixture, and extraction was done by mixing with a Voltex mixer for 1 minute. The resulting mixture was centrifuged at 10, 000 × g for 2 minutes, and the ethyl acetate layer (upper layer) was recovered in a new 0.5-mL microtube.

The extract was used for HPLC analysis in succession. The separation column used was a silica column, Shim-pack CLC-SIL (0.46 × 15 cm). For the mobile phase, a mixture of toluene, ethyl acetate, formic acid and methanol with a mixing ratio of 89:7.5:2:1.5 was used at the flow rate of 1 mL/min.

For detecting AFB₁ and its degradation products, a fluorescent detector (Shimadzu RF-535) was used, with the excitation wavelength of 365 nm and the detection wavelength of 425 nm, respectively.

For TLC analysis, 5 µL of the reaction mixture was taken and spotted on a silica gel plate, which was then developed with a mobile phase, and the spots of AFB₁ and the reaction product were visualized under UV-irradiation. Herein the mobile phase consisted of chloroform, ethyl acetate and 90 % formic acid, and their mixing ratio was 6:3:1.

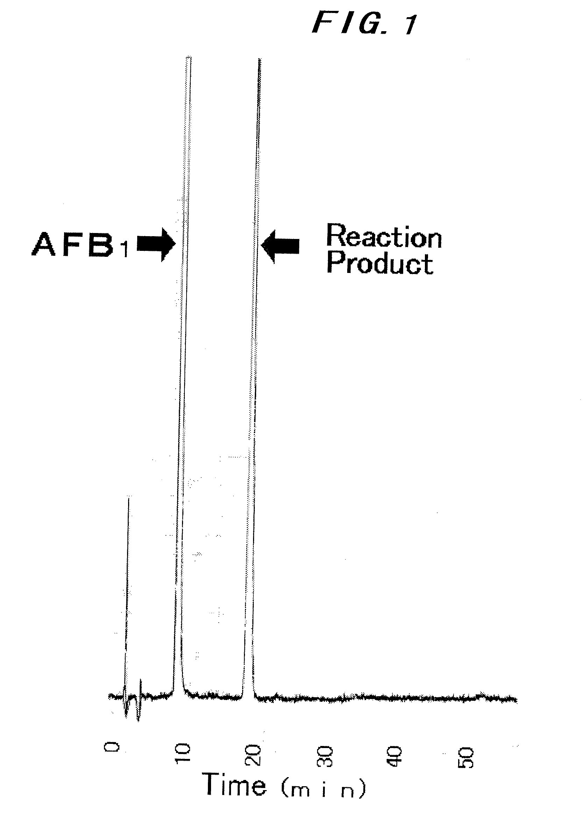

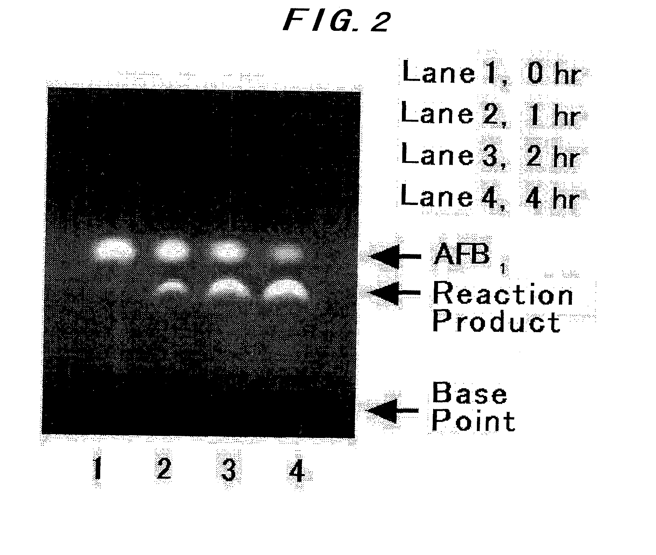

Figure 1 shows HPLC chromatogram of reaction mixture. A new peak was detected at a retention time of 18 minutes, which was considered to be the reaction product, while the retention time of AFB₁ was 9 minutes. TLC analysis of the reaction mixture confirmed that AFB₁ decreased in proportion to time and correspondingly a fluorescent substance (Rf = 0.7) with higher polarity than AFB₁ was newly formed (see Fig. 2).

Further studies confirmed that the reaction product appearing at a retention time of 18 minutes in HPLC analysis corresponds to the fluorescent substance (Rf = 0.7) newly confirmed in TLC analysis. Accordingly, the spot of this substance was prepared and collected from the TLC silica gel plate, extracted with chloroform, and further purified through HPLC. MS spectrum analysis was performed on the purified product.

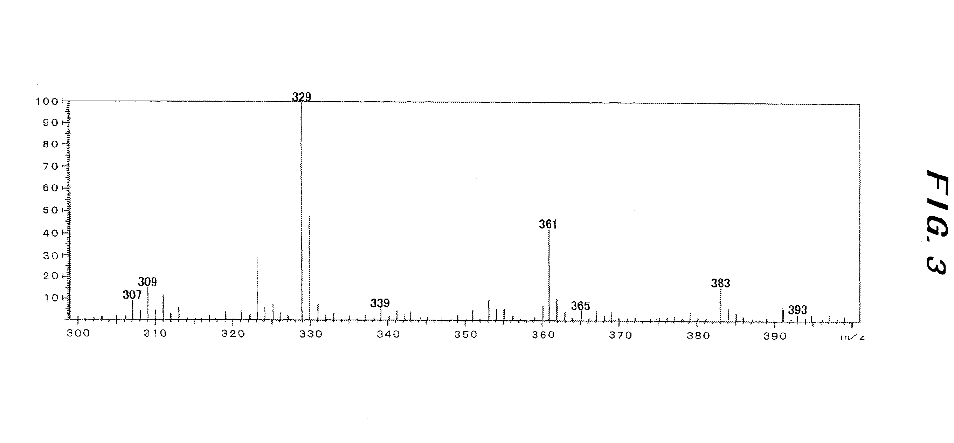

The molecular weight of the reaction product was found to be 328. The spectrum is shown in Fig. 3.

AFB₁ is represented by the following structural formula (1), and its molecular weight is 312. Therefore, it is presumed that the reaction product obtained above will be formed by introducing one oxygen atom into AFB₁. Three aflatoxin derivatives were considered to be candidates for it. Comparison of the reaction product with their authentic standard substances in point of the retention time on HPLC confirmed that the reaction product is aflatoxin Q₁ (AFQ₁). Accordingly, it was confirmed that AFB₁ is hydroxylated with hemin. The structural formula (2) of AFQ₁ is shown below.

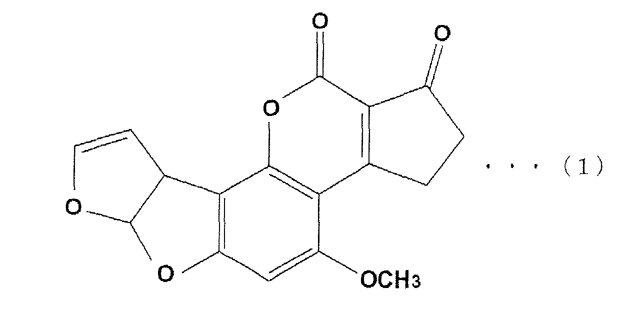

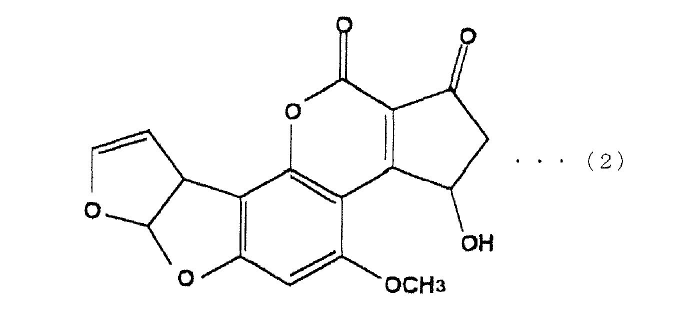

AFQ₁ is reported as the major metabolite of AFB₁ which is produced by microsomes of monkey and human liver *in vitro.* The toxicity of AFQ₁ was already reported to be approximately 18 times less than that of AFB₁, and it is also known that AFQ₁ does not exhibit mutagenic activity in the Ames test.

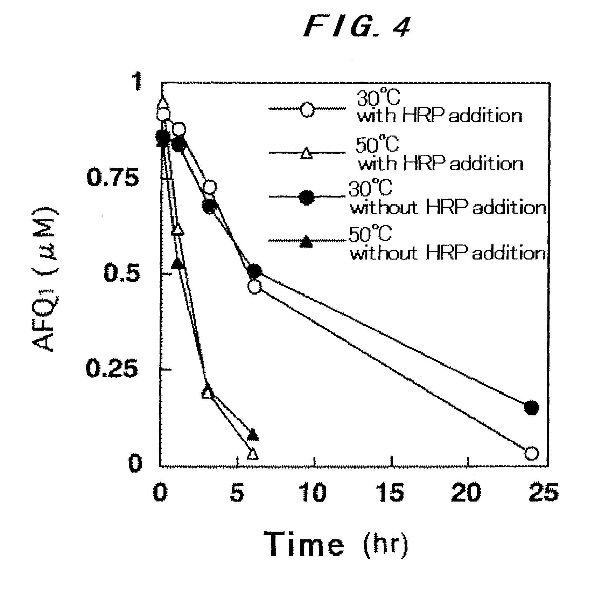

We also confirmed that AFQ₁ degradation is accelerated by heat, and it occurs non-enzymatically. Horseradish peroxidase (HRP) has a strong AFB₁-degrading activity as well as hemin. However, when AFQ₁ was added to a phosphate buffer so that its concentration is adjusted to 1 µM and incubated at 30°C or 50°C, there was no significant difference in the AFQ₁-degradation rate between the presence and the absence of HRP. On the other hand, AFQ₁ was degraded much rapidly at 50°C than 30°C, which indicates the AFQ₁-degradation rate is higher under high temperature conditions (see Fig. 4).

Since hemin is stable to heat, according to the invention, it is possible to convert AFB₁ with hemin into AFQ₁, which is further degraded by heating it.

### Example 2:

### Effect of hemin amount added on AFB₁ degradation:

AFB₁ degradation was performed at 30°C for 30 minutes in the same manner as in Example 1 except that the amount of hemin added was varied.

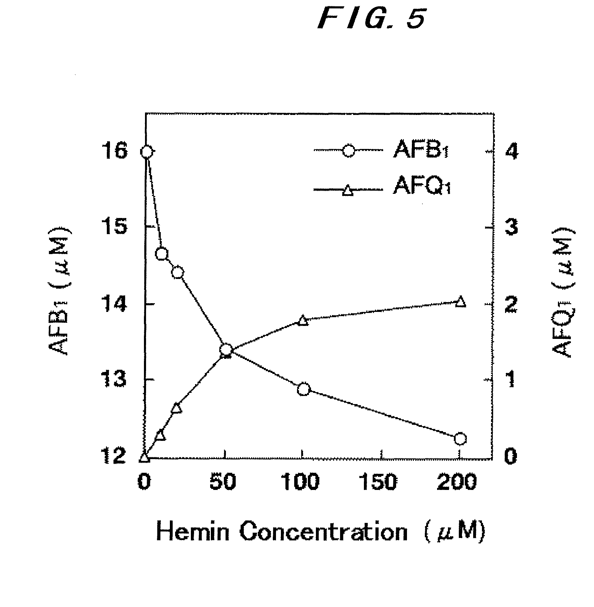

After the reaction, the amount of remaining AFB₁ and that of AFQ₁ formed were measured quantitatively by HPLC. The result is shown in Fig. 5.

As shown in Fig. 5, higher AFB₁ degradation was observed with a larger amount of hemin addition. When 200 µM of hemin was added, approximately 25 % of AFB₁ was degraded through reaction at 30°C for 30 minutes.

### Example 3:

### Effect of hydrogen peroxide amount added on AFB₁ degradation with hemin:

AFB₁ degradation was performed at 30°C for 30 minutes in the same manner as in Example 1 except that the amount of hydrogen peroxide added was varied.

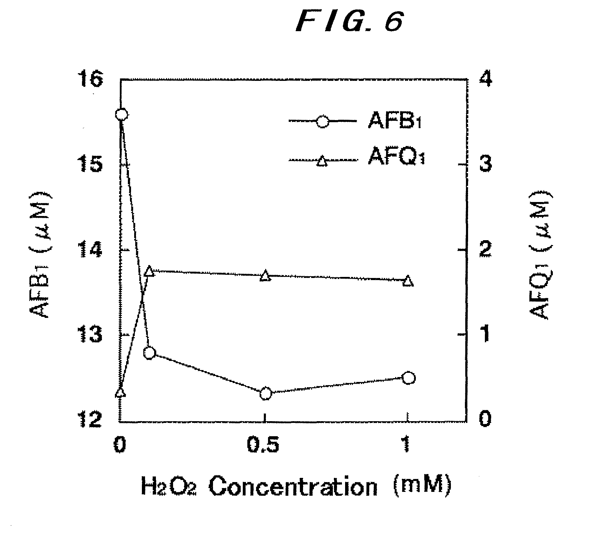

After the reaction, amount of the remaining AFB₁ and that of AFQ₁ formed were measured quantitatively by HPLC. The result is shown in Fig. 6.

As shown in Fig. 6, addition of hydrogen peroxide at the concentration from 0.1 to 1.0 mM showed more significant effect for the promotion of AFB₁-degradation than no addition of hydrogen peroxide, and the AFB₁-degradation efficiency was high (20 to 23 %). Though not shown, when hydrogen peroxide was added at the concentration from 1.0 mM to 10 mM, no significant increase was observed in AFB₁-degradation efficiency depending on hydrogen peroxide concentration.

### Example 4:

### Toxicity test with AFB₁ degradation product:

Mutagenecity test was performed with the AFB₁ degradation reaction mixture after hemin treatment. In the test, a conventional mutagenicity test kit "Umlac" (Nippon Antibody Laboratory) was used. Umlac is a kit for short-period mutagenicity test, *umu*-test, which was developed by Shinagawa (Research Institute for Microbial Diseases, Osaka University), et al. The test is to measure the expression level of *umu* gene using β-galactosidase activity as an index. The *umu* gene is considered to be a kind of SOS gene whose expression is induced by DNA-damaging chemicals, and known to be directly concerned with mutation. It has been confirmed that test result of "Umlac" well correlates with those of the Ames test and the carcinogenicity test that are currently used for typical mutagenicity test.

AFB₁ degradation was performed at 50°C for 6 hours in the presence or absence of hemin with the same reaction mixture as used in Example 1. After the reaction, the reaction mixture was subjected to the mutagenicity test with Umlac. Ten percent of DMSO aqueous solution was prepared as a control without AFB₁, and then subjected to the same mutagenicity test. The result is shown in Table 2.

In Table 2, the mutagenicity intensity is reflected as the value of OD₆₂₀. OD₆₂₀ of the reaction mixture with no hemin was 1.185 even after treated at 50°C for 6 hours, which indicates that mutagenicity still remained.

In contrast, OD₆₂₀ of the reaction mixture with hemin was 0.523 after the reaction, and no significant difference was found between this value and the value (0.531) obtained with the DMSO aqueous solution as a control. The amount of remaining AFB₁ in each reaction mixture was measured by HPLC, and it was confirmed that 12 µM AFB₁ remained in the reaction mixture without hemin, but that 0.16 µM or less AFB₁ remained in the reaction mixture with hemin, indicating that more than 99 % of the AFB₁ added had been degraded.

Accordingly, the mutagenicity can be removed by the treatment with hemin at 50°C for 6 hours.

**Table 2**

| Reaction Condition | *umu* Gene Expression^{*1} |
|---|---|
| Treatment at 50°C for 6 hours (with AFB₁ and hemin) | 0.523 |
| Treatment at 50°C for 6 hours (with AFB₁ but without hemin) | 1.185 |
| Control (10 % DMSO aqueous solution) | 0.531 |

| | |
|---|---|
| *1: The expression level of *umu* gene was confirmed by β-galactosidase activity as an index, which was measured as OD₆₂₀ absorbance after the reaction with X-gal as a substrate. Higher *umu* gene expression represents higher mutagenicity. The control value represents no mutagenicity. | |

### Example 5:

### AFB₁ degradation with other heme proteins:

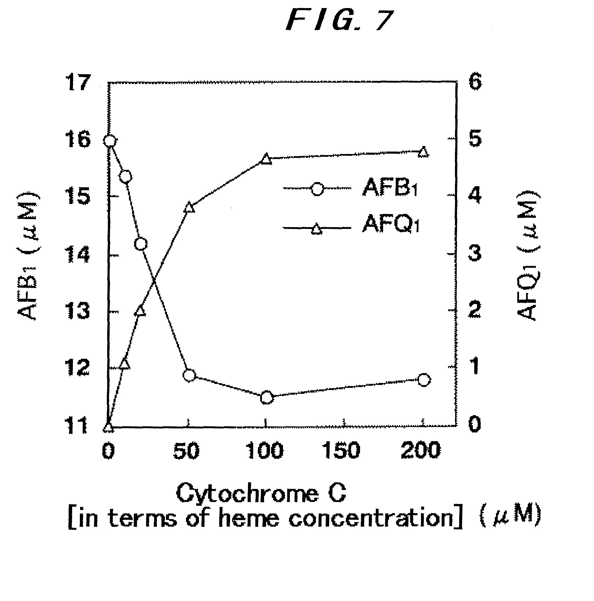

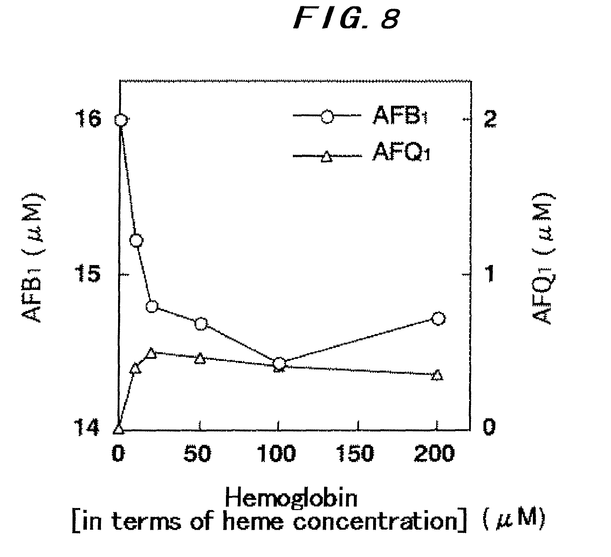

Cytochrome C and hemoglobin, both of which are heme proteins containing hemin, were tested for their AFB₁-degrading activity. Concretely, a predetermined amount of cytochrome C or hemoglobin was added to a phosphate buffer (pH 7.5) containing 16 µM of AFB₁, 0.5 mM of hydrogen peroxide, and 1 % (w/v) of detergent (Tween 80), and then incubated at 30°C for 30 minutes. The amount of AFB₁ degraded and the amount of AFQ₁ formed were measured by HPLC. The results are shown in Fig. 7 and Fig. 8.

As shown in Fig. 7, 10 to 30 % of AFB₁ degradation efficiency was achieved in 30 minutes by adding 10 to 200 µM of cytochrome C. Also as shown in Fig. 8, 5 to 13 % of AFB₁ degradation efficiency was achieved in 30 minutes by adding 10 to 200 µM of hemoglobin. The amount of AFQ₁ formed reached maximum when 100 to 200 µM of cytochrome C was added.

### Example 6:

### AFB₁ degradation with immobilized hemin:

Hemin was immobilized on EAH Sepharose 4B (Pharmacia), which is commercially available coupling carrier used for ligand immobilization in affinity chromatography. Concretely, in a 50 mM HEPES buffer (pH 7.5) containing 40 % (v/v) of 1,4-dioxane, hemin was added to 1 mL of EAH Sepharose 4B gel to a degree of saturated hemin concentration. Then an activator, EDC (1-ethyl-3-(3-dimethylaminopropyl)carbodiimide) was added to it to form a peptide bond between the amino groups of EAH Sepharose 4B and the carboxyl groups of hemin.

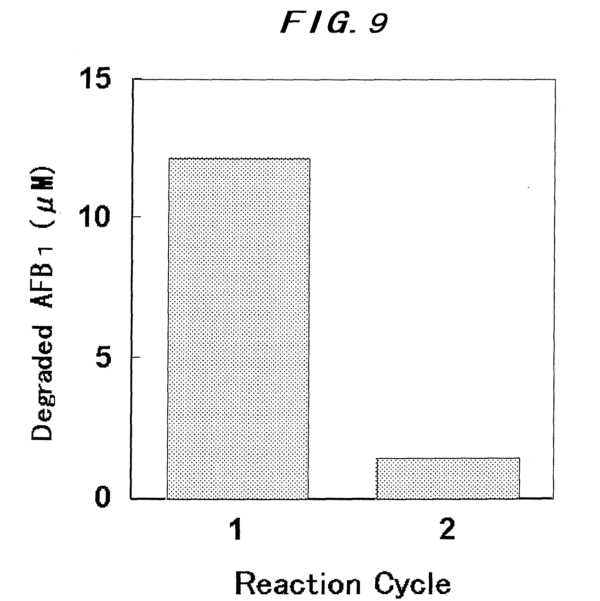

When 16 µM of AFB₁ was incubated with 100 µL of the hemin-immobilized gel at 50°C for 3 hours in the presence of 0.5 mM of hydrogen peroxide, more than 80 % of AFB₁, which had been added, diminished in the first treatment, as shown in Fig. 9. In addition, it was confirmed that AFQ₁ was formed in the reaction mixture.

The gel was recovered by centrifugation, washed with 50 % (v/v) ethanol aqueous solution, and then used again for AFB₁ degradation. In this case, approximately 10 % of AFB₁ diminished.

These results confirm that the hemin immobilized on EAH Sepharose 4B keeps sufficient AFB₁-degrading activity. By immobilization, hemin can be easily recovered after using it for AFB₁ degradation.

By optimization of other reaction conditions such as hydrogen peroxide concentration, it is expected that the reaction efficiency will increase further. Therefore, immobilized hemin can be recycled for AFB₁ degradation.

### Example 7:

### Bisphenol A (BPA) degradation with hemin:

Hemin was used for degradation of 2,2-bis(4-hydroxyphenyl)propane (bisphenol A).

One hundred twenty five microliter of 200 mM phosphate buffer (pH 7.5), 50 µL of aqueous solution of 10 % detergent (Tween 80), 145 µL of distilled water, 5 µL of 50 mM hydrogen peroxide aqueous solution, and 50 µL of 4 mM BPA aqueous solution were put into a 0.5-mL microtube to prepare the reaction mixture. One hundred twenty five microliter of 400 µM hemin suspension was added to it and incubated at 30°C. The final concentration of each component was: BPA, 400 µM; hydrogen peroxide, 500 µM; Tween 80, 1 %; hemin, 100 µM.

BPA degradation was confirmed by HPLC. After the reaction, a portion (100 µL) of the reaction mixture was taken, added to the equal amount of ethyl acetate, and extracted for 1 minute by mixing with a Voltex mixer. The mixture was centrifuged at 10,000 × g for 2 minutes, and the ethyl acetate layer (upper layer) was recovered in a new 0.5-mL microtube.

HPLC analysis was conducted using the extract. The column used was STR ODS-II (0.46 × 15 cm). For the mobile phase for BPA quantification, 50 % acetonitrile aqueous solution containing 0.1 % trifluoroacetic acid was used at the flow rate of 0.7 mL/min. A UV-visible spectrophotometric detector (Shimadzu SPD-6AV) was used at the absorbance wave length of 277 nm for BPA detection.

For the mobile phase for the detection of BPA degradation product, 30 % acetonitrile aqueous solution containing 0.1 % trifluoroacetic acid was used at the flow rate of 0.5 mL/min. The absorbance at wave length of 280 nm was monitored for this detection.

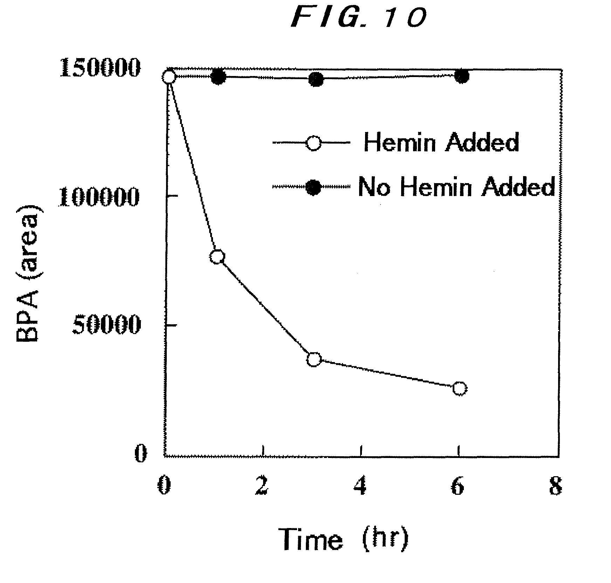

The reaction mixture was analyzed by HPLC. A peak of BPA was seen at a retention time of 6 minutes under the BPA quantification condition. As shown in Fig. 10, BPA did not decrease at all in the reaction mixture without hemin, but decreased with time in the presence of hemin. After the reaction for 6 hours, amount of BPA was decreased to 18 % of that initially added. On the other hand, under the condition for analysis of BPA degradation product, a new peak which was presumed to be a reaction product was detected at a retention time of 5.9 minutes. Therefore, the substance was purified by HPLC, and then subj ected to MS spectrum analysis. The molecular weight of the substance was found to be 134, which suggested that this substance is 4-isopropenylphenol. Accordingly, hemin is also effective for BPA degradation.

### Example 8:

### Aniline degradation with hemin:

Ten micro-molar of hemin was added to 50 mM phosphate buffer (pH 7.5) containing 50 µM aniline, 500 µM hydrogen peroxide in a 0. 5-mL microtube (to be a final volume of 200 µL), and reacted at 30°C for a predetermined period of time. Under this condition, the reaction mixture was uniform, thus no detergent was added to it.

After the reaction, equal amount of ethyl acetate was added to the reaction mixture, and extraction was done by mixing with a Voltex mixer for 1 minute, and then centrifuged at 10, 000 × g for 2 minutes. The resulting aniline-containing ethyl acetate layer (upper layer) was recovered in a new 0.5-mL microtube.

The ethyl acetate extract was directly subjected to HPLC analysis to determine the amount of remaining aniline. The column used was STRODS-II (0.46 × 15 cm). For mobile phase, 10 % acetonitrile aqueous solution was used at the flow rate of 0.5 mL/min. With a UV-visible spectrophotometric detector (Shimadzu SPD-6AV) , the absorbance at wave length of 280 nm was monitored for aniline detection.

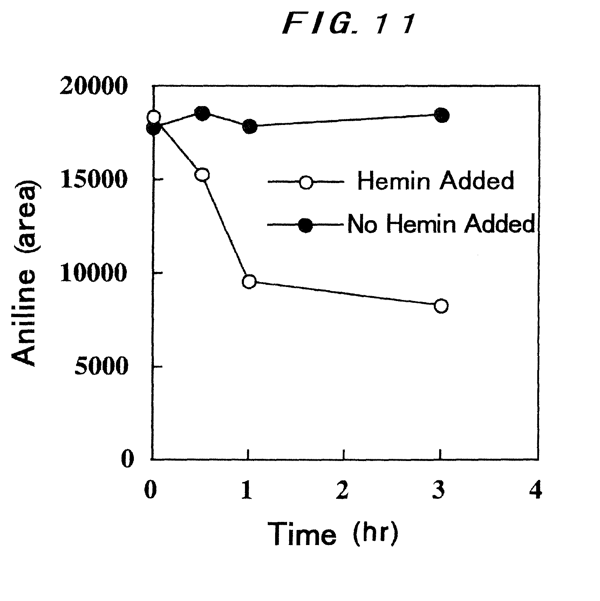

On the HPLC chromatogram, an aniline peak was seen at a retention time of 27 minutes. As shown in Fig. 11, the amount of aniline did not change at all in the absence of hemin, but it decreased with time in the presence of hemin. After reaction for 3 hours, aniline was decreased to 45 % of that initially added. Accordingly, hemin is also effective for aniline degradation.

## Claims

1. A composition for degrading toxic substances selected from aflatoxins-related substances and toxic aromatic compounds, which contains a hemin and/or heme-containing substance.

2. The composition for degrading toxic substances as claimed in claim 1, wherein the heme-containing substance is heme protein.

3. A method for detoxifying agricultural commodities, foods or feeds contaminated with toxic substances selected from aflatoxins-related substances and toxic aromatic compounds, the method which comprises contacting the contaminated agricultural commodities, foods or feeds with a hemin and/or heme-containing substance.

4. The method for detoxifying contaminated agricultural commodities, foods or feeds as claimed in claim 3, wherein the heme-containing substance is heme protein.

5. The method for detoxifying contaminated agricultural commodities, foods or feeds as claimed in claim 3 or 4, wherein hydrogen peroxide coexists along with the hemin and/or heme-containing substance.
